# EUROPÄISCHE PATENTSCHRIFT

(11) **EP 3 843 522 B1**
(45) Veröffentlichungstag und Bekanntmachung des Hinweises auf die Patenterteilung: **15.05.2024**
(21) Anmeldenummer: 19759326.2
(22) Anmeldetag: 21.08.2019
(51) Int. Cl.: A01B 73/00, A01C 7/08, A01C 7/20

(54) **LANDWIRTSCHAFTLICHE MASCHINE MIT TELESKOPRAHMEN**
AGRICULTURAL MACHINE WITH TELESCOPE FRAME
ENGIN AGRICOLE À CADRE TÉLESCOPIQUE

(30) Priorität: 27.08.2018 DE 102018120805
(43) Veröffentlichungstag der Anmeldung: 07.07.2021
(73) Patentinhaber: Amazonen-Werke H. Dreyer SE & Co. KG, 49205 Hasbergen (DE)
(72) Erfinder: MERTENS, Daniel, 26121 Oldenburg (DE)
(86) Internationale Anmeldenummer: PCT/EP2019/072352
(87) Internationale Veröffentlichungsnummer: WO 2020/043566

(56) Entgegenhaltungen:
- EP-A1- 3 235 362
- EP-A1- 3 335 533
- DE-A1- 4 138 237
- DE-U1- 29 908 130
- US-A- 3 719 403
- US-A- 4 112 649

## Beschreibung

Die Erfindung betrifft eine landwirtschaftliche Maschine gemäß dem Oberbegriff des Patentanspruches 1.

Eine derartige landwirtschaftliche Maschine ist in EP 3 335 533 A1 beschrieben. Diese landwirtschaftliche Maschine ist als mehrreihige Einzelkornsämaschine ausgeführt und umfasst einen Teleskoprahmen. Das heißt der Rahmen der landwirtschaftlichen Maschine weist ein in seiner Länge veränderbares Rahmenelement auf, an dem als Säaggregate ausgeführte Arbeitswerkzeuge befestigt sind. Damit das Rahmenelement beispielsweise für Transportfahrten auf die zulässige Gesamtlänge eingefahren und für den Betrieb auf dem Feld auf die gewünschte, größere Arbeitslänge ausgefahren werden kann, umfasst das Rahmenelement einen äußeren Rohrabschnitt und zwei innere Rohrabschnitte.

Der äußere Rohrabschnitt kann entweder direkt hinter einem landwirtschaftlichen Zugfahrzeug oder am restlichen Rahmen der landwirtschaftlichen Maschine angebunden sein. Er dient hierbei als Aufnahme für die beiden inneren Rohrabschnitte, welche sich in beiden Enden des äußeren Rohrabschnittes verschieben lassen, so dass sie mehr oder weniger aus den Enden hervorragen. Anhand des Überstandes der inneren Rohrabschnitte lässt sich die Länge des Rahmenelementes variieren. Damit die inneren Rohrabschnitte sich zuverlässig teleskopieren, das heißt ein- und ausfahren, lassen, ist jeder der inneren Rohrabschnitte mit insgesamt acht Gleitelementen versehen. Es sind jeweils vier Gleitelemente an der Oberseite und an der Unterseite gegenüberliegend derart befestigt, dass sie formschlüssig in die Innenkontur des äußeren Rohrabschnittes eingreifen.

Jeweils vier Gleitelemente, zwei oben und zwei unten, sind im Abstand zueinander an dem inneren Rohrabschnitt angeordnet und sind so bemessen, dass sie gleitverschieblich an die Innenflächen des äußeren Rohrabschnitts gedrückt werden. So ist eine lineare Lagerung des inneren Rohrabschnittes geschaffen, welche an dem inneren Rohrabschnitt auftretende Kräfte über die Gleitelemente in den stabilen äußeren Rohrabschnitt eingeleitet. Besonders beansprucht werden hierbei die Gleitelemente, welche an der Unterseite des inneren Rohrabschnittes angeordnet und dem offenen Ende des äußeren Rohrabschnittes am nächsten sind. Dies ergibt sich aus den Krafteinleitungsstellen am inneren Rohrabschnitt mit den durch die Gleitelemente gegebenen Abstützungspunkten am äußeren Rohrabschnitt und der daraus resultierenden Hebelwirkung.

Untersuchungen haben gezeigt, dass die Gleitelemente, welche im ausgefahrenen Zustand des Rahmenelementes zumindest annährend am offenen Ende des äußeren Rohrabschnittes angeordnet sind, den vorstehend beschriebenen, erhöhten Beanspruchungen in extremen Situationen nicht stand halten. Sie werden in diesen Situationen insbesondere bei Verschiebung des inneren Rohrabschnitts beschädigt, so dass eine ordnungsgemäße Lagerung und zuverlässiges Teleskopieren nicht mehr gewährleistet sind. Abgesehen von dem Versagen der Gleitelemente an der kritischen Stelle nahe dem offenen Ende des äußeren Rohrabschnitts hat sich die formschlüssige Lagerung mittels Gleitelementen als robust und zuverlässig bewährt.

Eine weitere landwirtschaftliche Maschine mit Teleskoprahmen ist aus der Druckschrift DE 41 38 237 A1 bekannt.

Der vorliegenden Erfindung liegt daher die Aufgabe zugrunde, einen Teleskoprahmen derart weiterzubilden, dass er den ermittelten Beanspruchungen zuverlässig standhält.

Diese Aufgabe wird erfindungsgemäß dadurch gelöst, dass der äußere Rohrabschnitt an zumindest einem offenen Ende ein Gegenlagerelement umfasst. Infolge dieser Maßnahme können die Gleitelemente, welche sich im ausgefahrenen Zustand des Rahmenelementes zumindest annährend am offenen Ende des äußeren Rohrabschnittes angeordnet sind und den Beanspruchungen nicht stand halten, entfallen und von einem Gegenlagerelement ersetzt werden. Das Gegenlagerelement ist insofern gleichwirkend mit den Gleitelementen, als dass der innere Rohrabschnitt durch das Gegenlagerelement gelagert wird. Ein wesentlicher Vorteil ergibt sich dadurch, dass das Gegenlagerelement dem äußeren Rohrabschnitt zugeordnet ist in Kombination mit der geeigneten Positionierung. Durch die Anordnung des Gegenlagerelementes am offenen Ende des äußeren Rohrabschnittes resultieren abgeschwächte Hebelwirkungen über den gesamten Verschiebeweg des mindestens einen inneren Rohrabschnitts, da das Gegenlagerelement ortsfest am offenen Ende angeordnet ist und der Hebelarm zur Krafteinleitungsstelle am ausgeschobenen Bereich des inneren Rohrabschnitts auf diese Weise so kurz wie möglich geschaffen ist. Folglich sinken die auftretenden Beanspruchungen. Außerdem vorteilhaft ist, dass das Gegenlagerelement dem äußeren Rohrabschnitt zugeordnet ist und somit nicht gemeinsam mit dem zumindest einen inneren Rohrabschnitt verschoben wird. Eine solch stationäre Anordnung des Gegenlagerelementes bewirkt, dass größere Kräfte aufgenommen und abgeleitet werden können.

Der erfindungsgemäße Teleskoprahmen kann in Fahrtrichtung links- und/oder rechtsseitig einen inneren Rohrabschnitt oder mehrere innere Rohrabschnitte aufweisen. Folglich kann der äußere Rohrabschnitt auch an beiden offenen Enden ein Gegenlagerelement umfassen.

Erfindungsgemäß umfasst das Gegenlagerelement ein höhenverstellbares Lagerelement, das sich länglich zwischen in Fahrtrichtung gegenüberliegenden Seiten des äußeren Rohrabschnitts erstreckt und unter dem mindestens einen inneren Rohrabschnitt am äußeren Rohrabschnitt angeordnet ist. Durch die längliche Form und die Anordnung unter dem inneren Rohrabschnitt werden die Gewichtskräfte des inneren Rohrabschnittes und andere in zumindest annährend vertikaler Richtung abwärts wirkende Kräfte in besonders einfacher Weise nach dem Prinzip eines Auflagerpunktes aufgenommen und an den äußeren Rohrabschnitt abgeleitet. Der innere Rohrabschnitt liegt sicher auf dem Lagerelement auf und wird zusätzlich durch die verbleibenden Gleitelemente in dem äußeren Rohrabschnitt gelagert. Zudem wird durch diese Weiterbildung eine platzsparende und kompakte Bauweise des Gegenlagerelementes erreicht. Das Lagerelement erstreckt sich lediglich über die Breite des äußeren Rohrabschnittes.

In einer weiteren vorteilhaften Weiterbildung umfasst das Gegenlagerelement einen Exzenterbolzen mit zwei gegenüberliegenden Verbindungsabsätzen und einem sich zwischen den Verbindungsabsätzen erstreckenden Auflagekörper.

Hierbei ist vorteilhaft, dass die Verbindungsabsätze exzentrisch an dem Auflagekörper angeordnet sind und der Exzenterbolzen über die zwei Verbindungsabsätze drehbar an dem äußeren Rohrabschnitt angeordnet ist. Durch die exzentrische, gegenüberliegende Anordnung der Verbindungsabsätze am Auflagekörper bilden diese eine Drehachse in Längsrichtung, welche nicht mit der Längsachse des Auflagekörpers zusammen fällt. Sprich, die durch die Verbindungsabsätze verlaufende Drehachse des Exzenterbolzens ist beabstandet zu der Längsachse des Auflagekörpers.

Durch die vorstehende Beabstandung der Drehachse des Exzenterbolzens zur Längsachse des Auflagekörpers in Kombination mit der drehbaren Anbindung des Exzenterbolzens am äußeren Rohrabschnitt lässt sich die Außenkontur des Auflagekörpers gegenüber der Anbindung am äußeren Rohrabschnitt durch Drehen des Exzenterbolzens heben und senken.

Die erfindungsgemäße landwirtschaftliche Maschine ist ferner vorteilhaft dadurch weitergebildet, dass das Lagerelement auf dem Auflagekörper des Exzenterbolzens angeordnet ist und dass das Lagerelement mittels des Exzenterbolzens höhenverstellbar zwischen den gegenüberliegenden Seiten des äußeren Rohrabschnitts gelagert ist. Anhand des zuvor beschriebenen, einstellbaren Höhenunterschieds des Auflagekörpers durch Drehung des Exzenterbolzens ist das Gegenlagerelement in besonders einfacher Weise mit einem höhenverstellbaren Lagerelement geschaffen.

Infolge dieser Weiterbildung ist die Wartung und Erstmontage des inneren Rohrabschnitts in vortrefflicher Weise verbessert. Zu Wartungs- und Montagezwecken kann das Lagerelement in eine niedrige Position, das heißt die Außenkontur des Auflagekörpers wird gegenüber der Anbindung am äußeren Rohrabschnitt abgesenkt, verbracht werden, so dass Bauraum freigegeben wird und der mindestens eine innere Rohrabschnitt mit seinen Gleitelementen problemlos in den äußeren Rohrabschnitt eingeschoben oder aus diesem herausgezogen werden kann. Um für den inneren Rohrabschnitt einen nahezu spielfreien Sitz zu schaffen, wobei zusätzlich die Fertigungstoleranzen ausgeglichen werden, kann das Lagerelement in eine erhöhte Position, das heißt die Außenkontur des Auflagekörpers wird gegenüber der Anbindung am äußeren Rohrabschnitt angehoben, verbracht werden. In der Folge werden die Gleitelemente sicher in Anlage mit der Innenkontur des äußeren Rohrabschnittes gebracht, so dass das Rahmenelement zuverlässig teleskopierbar ist ohne zu verkanten.

Des Weiteren übernimmt das Lagerelement des Gegenlagerelementes die Höhenführung des mindestens einen inneren Rohrabschnittes in einstellbarer Weise. Das heißt, durch Drehung des Exzenterbolzens ist die Höhenlage des inneren Rohrabschnittes veränderbar.

In einer weiteren vorteilhaften Weiterbildung der Erfindung ist das Lagerelement als drehbar auf dem Exzenterbolzen gelagerte, vorzugsweise aus einem metallischem Werkstoff bestehende, Rolle ausgeführt. Dies hat zum einen den Vorteil, dass bei Ausfahr- und Einfahrbewegungen des inneren Rohrabschnittes verringerte Reibungsverluste auftreten, da der innere Rohrabschnitt über die Rolle abrollen kann. Zum anderen ist die Ausführung der Rolle aus Metall vorteilhaft, da diese so besonders hohe Kräfte über die Flächenpressung zwischen innerem Rohrabschnitt und Rolle aufzunehmen vermag. Insgesamt ist das Lagerelement, als Rolle ausgeführt, so mit einer zuverlässigen Funktionserfüllung und einer langen Lebensdauer geschaffen.

In einer weiteren besonders vorteilhaften Weiterbildung der Erfindung ist vorgesehen, dass die Rolle eine zylindrische Laufbahn aufweist, wobei die Laufbahn zumindest teilweise von einem elastischen Kunststoff umfasst ist. Der elastische Kunststoff ist hierbei so auf der Laufbahn angeordnet, dass der innere Rohrabschnitt zumindest größtenteils mit dem Kunststoff in Kontakt steht. Durch die Umfassung der Rolle mit beispielsweise einem Elastomer wird der Reibkoeffizient zwischen der Rolle und dem inneren Rohrabschnitt derart erhöht, dass ein sicheres Abrollen gewährleistet ist. Anderenfalls bestünde das Risiko, dass der innere Rohrabschnitt, welcher vorzugsweise ebenfalls aus Metall gefertigt ist, unter derartiger Last über die Rolle geführt wird, dass es zu einem Gleitkontakt kommt. Ein Gleitkontakt ist an dieser Stelle zur Reduzierung der Reibungsverluste und Schonung der Bauteile zu vermeiden, weshalb sich diese Weiterbildung im Gegensatz dazu durch eine weiter gesteigerte Lebensdauer der beteiligten Komponenten und eine verlustarme Ausführungsform auszeichnet. Die Lagerreibung der Rolle bei Drehung ist gegenüber der so vermiedenen Gleitreibung vernachlässigbar klein.

Im Betrieb der landwirtschaftlichen Maschine treten regelmäßig dynamische Kräfte am inneren Rohrabschnitt auf. Die zumindest teilweise von elastischem Kunststoff umfasste Laufbahn der Rolle bewirkt, dass diese dynamischen Kräfte zumindest teilweise abgefedert, das heißt getilgt, werden. Einem Aufschwingen bzw. einer Resonanzbeschädigung des Systems ist somit in einfacher Weise vorgebeugt.

Die erfindungsgemäße landwirtschaftliche Maschine ist ferner vorteilhaft dadurch weitergebildet, dass die Rolle an beiden Enden sich von der Laufbahn radial nach außen erstreckende, tellerförmige Führungsabsätze aufweist. Ein wesentlicher Vorteil dieser Weiterbildung besteht darin, dass der innere Rohrabschnitt durch die Führungsabsätze eine Seitenführung erfährt. Soll heißen, der Sitz des inneren Rohrabschnittes wird durch die Führungsabsätze in und entgegen der Fahrtrichtung begrenzt. Da nicht zuletzt auch Kräfte in und gegen die Fahrtrichtung auf den inneren Rohrabschnitt einwirken, ist infolge der vorstehenden Maßnahme verhindert, dass der innere Rohrabschnitt sich im äußeren Rohrabschnitt leicht verkanten kann. Folglich zeichnet sich diese Weiterbildung durch eine gesteigerte Betriebszuverlässigkeit und robuste Bauweise aus.

Zudem ergibt sich der Vorteil, dass der mindestens eine innere Rohrabschnitt anhand des höhenverstellbaren Lagerelementes des Gegenlagerelementes mit den Gleitelementen verspannbar ist, was ebenfalls vortrefflich zum Ausgleich von Fertigungstoleranzen genutzt werden kann. Zudem kann der innere Rohrabschnitt mit ausreichend Spiel komfortabel montiert und gewartet werden, während sein Sitz im Betrieb durch die Verspannung mit den Gleitelementen in vorteilhafter Weise zumindest annährend spielfrei ist. Im Betrieb auftretende Kräfte können so annährend unmittelbar abgeleitet werden.

In einer weiteren vorteilhaften Ausführungsform der Erfindung ist vorgesehen, dass zumindest ein Verbindungsabsatz des Exzenterbolzens den äußeren Rohrabschnitt durchdringt, wobei auf der Außenseite des äußeren Rohrabschnitts an dem Verbindungsabsatz ein, vorzugsweise als Sechskantkopf ausgebildetes, Einstellelement mittels dessen eine Drehung des Exzenterbolzens einstellbar ist angeordnet ist. Als Einstellelement ist neben einem Sechskantkopf auch ein Handgriff oder Handrad denkbar, ebenso wie sämtliche andere Köpfe, die das Ansetzen eines Werkzeuges zu dessen Drehung erlauben. Die Drehung des Exzenterbolzens ist stufenlos einstellbar und durch vorstehend bereits erläuterte Zusammenhänge unmittelbar mit der Höhenverstellung des inneren Rohrabschnittes bzw. dessen Verspannung gegen die Gleitelemente verknüpft. Diese Ausführungsform ist daher für einen Benutzer der landwirtschaftlichen Maschine besonders vorteilhaft, weil die Einstellung der Drehung mittels des Einstellelementes nicht nur besonders fein möglich ist, sondern auch weil das Einstellelement auf der Außenseite des äußeren Rohrabschnitts in einfacher und zweckmäßiger Weise zugänglich ist. Dies erleichtert es dem Benutzer für eine richtige Einstellung und somit die zuverlässige Funktion der landwirtschaftlichen Maschine Sorge zu tragen.

In einer weiteren vorteilhaften Weiterbildung der landwirtschaftlichen Maschine ist vorgesehen, dass der äußere Rohrabschnitt in seinem Inneren zumindest ein zweites Gegenlagerelement umfasst. Durch diese Weiterbildung könnten weitere Gleitelemente entfallen und die Einstellungsmöglichkeiten der Höhenführung des inneren Rohrabschnitts und die Seitenführung würden weiter verbessert.

In einer besonders vorteilhaften Weiterbildung der landwirtschaftlichen Maschine ist das zweite Gegenlagerelement mit seinem Lagerelement über dem inneren Rohrabschnitt angeordnet. Vorzugsweise ist das zweite Gegenlagerelement zumindest annährend an der Stelle im äußeren Rohrabschnitt angeordnet, wo sich das hintere Ende des inneren Rohrabschnitts befindet, wenn dieses auf die maximale Länge aus dem äußeren Rohrabschnitt verschoben ist. An dieser Stelle treten laut Untersuchungen die zweitgrößten Kräfte nach dem offenen Ende des äußeren Rohrabschnitts, das heißt der Stelle an dem das erste Gegenlagerelement angeordnet ist, auf. Durch die Anordnung des zweiten Gegenlagerelementes kann dem System eine weiter gesteigerte Robustheit verliehen werden, da auftretende Kräfte so besonders wirkungsvoll aufgenommen werden können.

Es ist ferner vorteilhaft, dass der mindestens eine innere Rohrabschnitt dazu eingerichtet ist, vorzugsweise in vertikaler Richtung, auftretende Kräfte über das Gegenlagerelement in die Gleitelemente einzuleiten. Das Gegenlagerelement fungiert hierbei nach dem Prinzip einer Auflagerstelle und sorgt dank seiner Anordnung am offenen Ende des äußeren Rohrabschnitts dafür, dass der Hebelarm für auftretende Kräfte möglichst kurz ist und eingeleitete Momentenbelastungen somit so klein wie möglich sind.

Weitere Einzelheiten der Erfindung sind der Beispielsbeschreibung und den Zeichnungen zu entnehmen. Die Zeichnungen zeigen
- Fig.1: den Teleskoprahmen einer Einzelkornsämaschine mit Arbeitswerkzeugen in perspektivischer Ansicht,
- Fig.2: den Teleskoprahmen einer landwirtschaftlichen Maschine in austeleskopiertem Zustand,
- Fig.3: den Teleskoprahmen, gemäß Fig.2, in einteleskopiertem Zustand,
- Fig.4: die Verbindung zwischen einem inneren Rohrabschnitt und einem äußeren Rohrabschnitt in Detail- und perspektivischer Ansicht,
- Fig.5: den äußeren Rohrabschnitt mit einem Gegenlagerelement mit einem Lagerelement im abgesenkten Zustand in Seitenansicht,
- Fig.6: den äußeren Rohrabschnitt mit dem Gegenlagerelement mit dem Lagerelement im angehobenen Zustand in Seitenansicht, und
- Fig.7: einen Exzenterbolzen des Gegenlagerelementes in perspektivischer Ansicht.

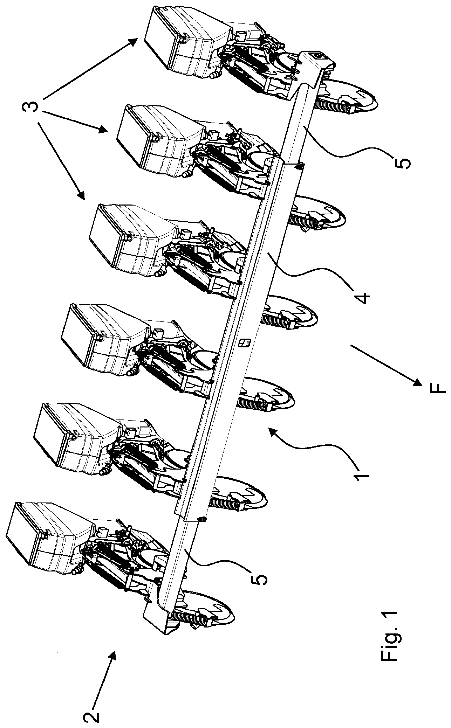

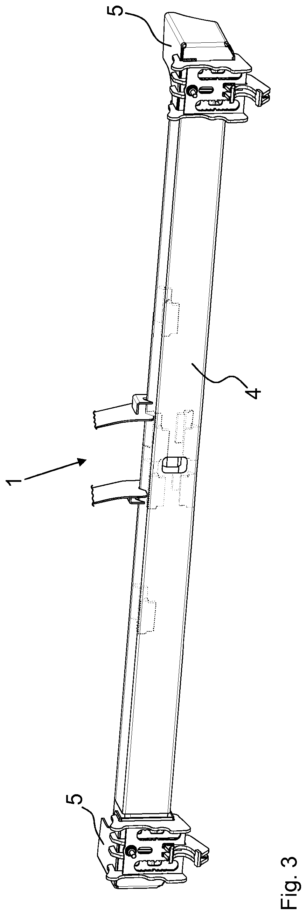

Ein Teleskoprahmen 1 einer teilweise dargestellten, als Einzelkornsämaschine 2 ausgeführten landwirtschaftlichen Maschine ist in Fig.1 zu sehen. Der sich quer zur Fahrtrichtung F erstreckende Teleskoprahmen 1 dient der Aufnahme von als Säaggregaten ausgebildeten Arbeitswerkzeugen 3 und seine Länge ist in Längsrichtung veränderbar. Die Arbeitswerkzeuge 3 sind bei dieser Einzelkornsämaschine in dem in Fig.1 dargestellten, austeleskopierten Zustand des Teleskoprahmens 1 gleichmäßig über seine Länge verteilt und können so zur flächendeckenden Bearbeitung eines Feldes eingesetzt werden. Beispielsweise um die Einzelkornsämaschine 2 über öffentliche Straßen zu verbringen, ist es notwendig die Länge des Teleskoprahmens 1 zu mindern, wobei der Abstand der außen angeordneten Arbeitswerkzeuge 3 zur Mitte hin reduziert wird. Der Teleskoprahmen kann hierzu vorzugsweise mittels motorischer Betätigungs- und/oder Stellmittel in einen einteleskopierten Zustand, wie in Fig.3 dargestellt, versetzt werden. Hierzu umfasst der Teleskoprahmen 1 einen äußeren Rohrabschnitt 4, in dem links- sowie rechtsseitig jeweils ein innerer Rohrabschnitt 5 verschiebbar gelagert ist.

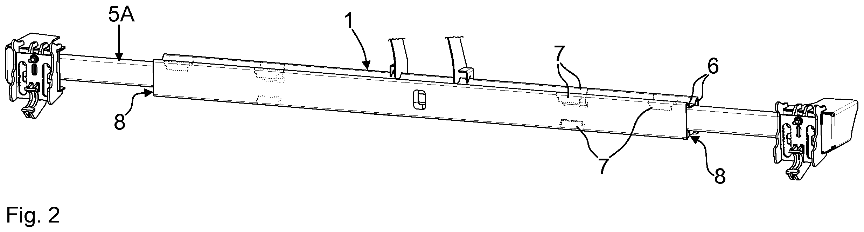

Der äußere Rohrabschnitt 4 weist ein zumindest annährend H-förmiges Querschnittsprofil auf, in dessen Auskragungen 6 an dem inneren Rohrabschnitt 5 befestigte Gleitelemente 7 formschlüssig einschiebbar sind, was in Fig.2 und 3 durch die verdeckten Linien angedeutet ist. Die Gleitelemente 7 gleiten auf der Innenkontur des äußeren Rohrabschnitts 4 ab und bilden zusammen mit jeweils einem an den offenen Enden des äußeren Rohrabschnitts 4 angeordneten Gegenlagerelement 8 die Lagerung des inneren Rohrabschnitts 5. An jedem der beiden inneren Rohrabschnitte 5 sind insgesamt sechs Gleitelemente 7 angeordnet: je vier an dem im äußeren Rohrabschnitt 4 steckenden offenen Ende und je zwei in Längsrichtung beabstandet dazu an der Oberseite 5A des inneren Rohrabschnitts 5.

Alternativ wäre es denkbar, die zwei der vier Gleitelemente 7 an der Oberseite 5A am offenen Ende des inneren Rohrabschnittes 5 durch ein zweites Gegenlagerelement 8 zu ersetzen. In dieser nicht gezeigten, alternativen Ausführungsform wäre dem äußeren Rohrabschnitt 4 in seinem Inneren für jeden inneren Rohrabschnitt 5 jeweils ein zweites Gegenlagerelement zuzuordnen, welches über dem inneren Rohrabschnitt angeordnet wäre.

Die Gegenlagerelemente 8 im gewählten Beispiel der Fig. 1 bis 7 sind jeweils an dem offenen Ende des äußeren Rohrabschnitts 4 unterhalb des inneren Rohrabschnitts 5 angeordnet. So ergibt sich für die inneren Rohrabschnitte 5 ein nahezu spielfreier Sitz, was vorteilhaft ist, um angreifende Kräfte über die Gleitelemente 7 an den äußeren Rohrabschnitt 4 abzuleiten, wobei ein linearer Freiheitsgrad quer zur Fahrtrichtung F frei bleibt, um die Teleskopierung zu erlauben.

Um den Teleskoprahmen 1 von dem in Fig.2 dargestellten austeleskopierten Zustand in den in Fig.3 dargestellten einteleskopierten Zustand zu verbringen und anders herum, kann im Innern des Teleskoprahmens 1 ein Aktor vorgesehen sein. Der Aktor kann ein Zylinder oder anders gearteter Linearantrieb sein und bewirkt eine Verschiebung der inneren Rohrabschnitte 5 über die vorstehend beschriebene Lagerung. Im einteleskopierten Zustand gemäß Fig.3 ist der innere Rohrabschnitt 5 bis auf die Anbindungspunkte für die in Fig.3 nicht dargestellten Arbeitswerkzeuge 3 in den äußeren Rohrabschnitt 4 eingefahren, so dass die Gesamtlänge des Teleskoprahmens 1 vorzugsweise eine länderspezifische maximale Transportbreite nicht überschreitet.

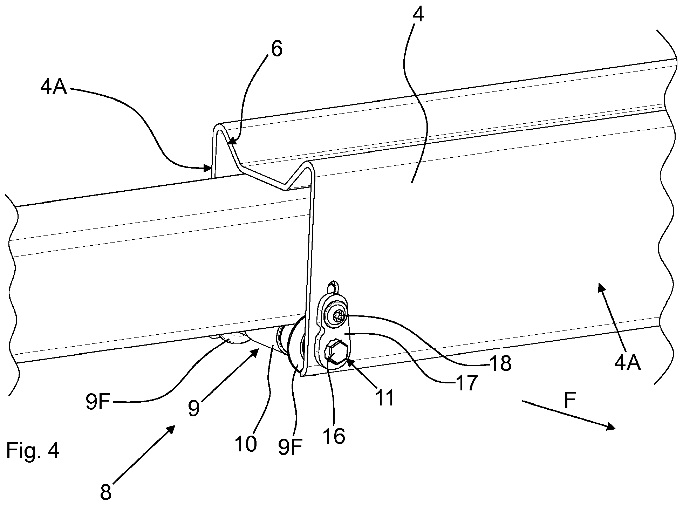

In Fig.4 ist die Verbindung zwischen einem inneren Rohrabschnitt 5 und einem äußeren Rohrabschnitt 4 in Detailansicht aus einer Perspektive von schräg vorne oben gezeigt. Das am offenen Ende des äußeren Rohrabschnitts 4 angeordnete Gegenlagerelement 8 umfasst ein als Rolle 9 ausgeführtes Lagerelement, welche sich zwischen den in Fahrtrichtung F gegenüberliegenden Seitenwänden 4A des äußeren Rohrabschnitts 4 erstreckt. Die Rolle 9 hat eine längliche Form und ist unter dem inneren Rohrabschnitt 5 angeordnet, so dass sie die Gewichtskräfte des inneren Rohrabschnittes 5 und andere in zumindest annährend vertikaler Richtung abwärts wirkende Kräfte besonders einfach aufnehmen und ableiten kann. Die aus Metall gefertigte Rolle 9 weist eine zylindrische Laufbahn auf, welche in ihrem mittleren Bereich von einem Elastomer 10 umfasst ist. Sie ist drehbar auf einem Exzenterbolzen 11 angeordnet. Die Ummantelung aus Elastomer 10 bewirkt, dass die Rolle 9 sich beim Teleskopieren zuverlässig auf dem Exzenterbolzen 11 mit dreht, so dass der innere Rohrabschnitt 5 möglichst verlustarm über die Rolle 9 abrollend verschiebbar ist.

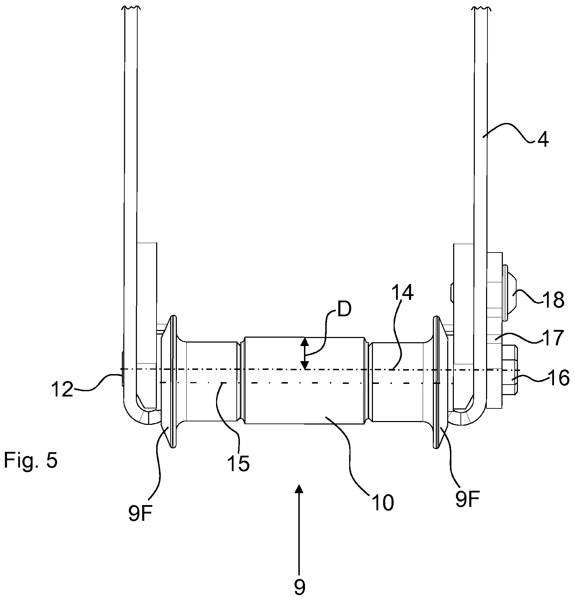

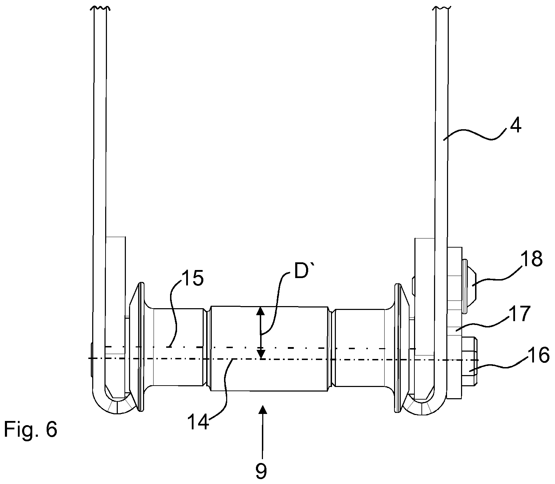

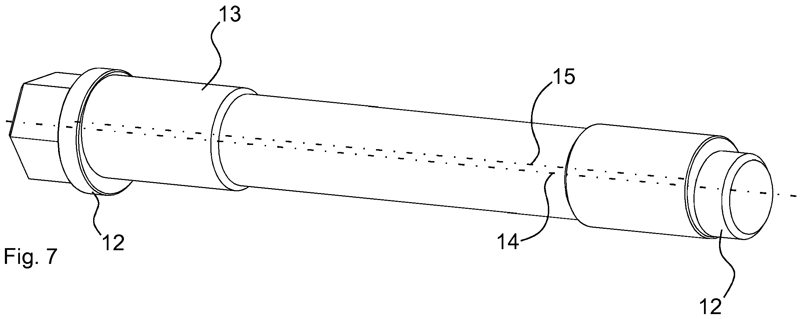

Die Rolle 9 ist mittels des Exzenterbolzens 11 zwischen einem in Fig.5 gezeigten abgesenkten Zustand und einem in Fig.6 gezeigten angehobenen Zustand stufenlos höhenverstellbar. Hierzu weist der Exzenterbolzen 11 zwei gegenüberliegende Verbindungsabsätze 12 und einen sich zwischen den Verbindungsabsätzen 12 erstreckenden Auflagekörper 13 auf, wie Fig.7 zeigt. Die zylindrischen Verbindungsabsätze 12 dienen der drehbaren Anordnung des Exzenterbolzens 11 am äußeren Rohrabschnitt 4 und sind exzentrisch an dem ebenfalls im Wesentlichen zylindrischen Auflagekörper 13 angeordnet. Die Verbindungsabsätze 12 bilden somit eine Drehachse 14 für den Exzenterbolzen 11, welche beabstandet ist zu der Längsachse 15 des Auflagekörpers 13. Da die Rolle 9 über eine hier nicht dargestellte Bronzebuchse auf dem Auflagekörper 13 angeordnet ist und somit dieselbe Längsachse 15 hat wie der Auflagekörper, führt eine Drehung des Exzenterbolzens 11 in seiner Anbindung am äußeren Rohrabschnitt 4 dazu, dass sich die Rolle 9 hebt oder senkt. Die Funktion des Exzenterbolzens 11 ist also, dass das als Rolle 9 ausgeführte Lagerelement durch Drehung des Exzenterbolzens 11 um die Drehachse 14 stufenlos höhenverstellbar zwischen den gegenüberliegenden Seitenwänden 4A des äußeren Rohrabschnitts 4 angeordnet ist.

Zu Montage- oder Wartungszwecken des inneren Rohrabschnitts 5 lässt sich die Rolle 9 in den in Fig.5 gezeigten abgesenkten Zustand verbringen. In diesem Zustand ist der Abstand D, senkrecht nach oben bemessen zwischen der Drehachse 14 und der Außenkontur der Rolle 9, gering, so dass im Innern des äußeren Rohrabschnittes 4 viel Bauraum freigegeben ist. Der freigegebene Bauraum ermöglicht es den inneren Rohrabschnitt 5 problemlos in den äußeren Rohrabschnitt 4 einzuschieben oder den selbigen aus dem äußeren Rohrabschnitt 5 zu entfernen. Die Erstmontage und Wartungsarbeiten sind somit in besonders vorteilhafter Weise durch die mittels des Exzenterbolzens 11 realisierte Höhenverstellung der Rolle 9 erleichtert.

Um im Betrieb einen sicheren Sitz des inneren Rohrabschnittes 5 zu erreichen, wird die Rolle 9 in den in Fig. 6 dargestellten, angehobenen Zustand verbracht. In diesem angehobenen Zustand ist der Abstand D' vergleichsweise groß, so dass wenig Bauraum freigegeben ist. Das bewirkt, dass der innere Rohrabschnitt 5 mit den Gleitelementen 7 im äußeren Rohrabschnitt 4 verspannt ist Im angehobenen Zustand der Rolle 9 lässt sich der innere Rohrabschnitt 4 möglichst nur noch in seiner Längsrichtung bewegen, also teleskopieren. Als zusätzliche Absicherung, neben der Verspannung der formschlüssigen Lagerung über die Gleitelemente 7 gegen die Innenkontur des äußeren Rohrabschnittes, gegen Bewegungen des inneren Rohrabschnittes 5 in oder entgegen der Fahrtrichtung F weist die Rolle 9 an beiden Enden tellerförmige Führungsabsätze 9F auf. Die Führungsabsätze 9F erstrecken sich von der Laufbahn der Rolle 9 radial nach außen und bilden so eine Seitenführung für den inneren Rohrabschnitt 5.

Um dem Benutzer die Höheneinstellung der Rolle 9 mittels des Exzenterbolzens 11 zu erleichtern, ist der in Fahrtrichtung F vordere Verbindungsabsatz 12 so ausgeführt, dass er den äußeren Rohrabschnitt 4 durchdringt, wobei auf der Außenseite des äußeren Rohrabschnittes 4 ein als Sechskantkopf 16 ausgebildetes Einstellelement an dem vorderen Verbindungsabsatz 12 angeordnet ist. Die Drehlage des Sechskantkopf 16 und somit des Exzenterbolzens 11 ist durch ein Sicherungsblech 17 gesichert. Das Sicherungsblech 17 umgreift den Sechskantkopf 16 formschlüssig und kann nach Lösen einer Schraube 18 entfernt werden. Nach Entfernen des Sicherungsbleches 17 kann der Benutzer komfortabel von der Vorderseite des Teleskoprahmens 1 mit Hilfe eines handelsüblichen Sechskantschlüssels die Drehlage des Exzenterbolzens 11 stufenlos einstellen und so die Rolle 9 zwischen den unterschiedlichen Zuständen, wie in Fig.5 und 6 gezeigt, oder in Zwischenzustände verbringen. Das Ziel der Einstellung für den Benutzer sollte es sein, eine geeignete Höhenlage für den inneren Rohrabschnitt 5 zu finden. Das heißt, die Rolle 9, auf der der innere Rohrabschnitt 5 aufliegt, ist soweit anzuheben bzw. abzusenken, dass die Gleitelemente 7 zuverlässig in Kontakt mit der Innenkontur des äußeren Rohrabschnitts 4 stehen. Im Zuge dieser Einstellungen rechts und links werden Fertigungstoleranzen und -ungenauigkeiten ausgeglichen und die Grundlage für einen zuverlässigen Betrieb geschaffen.

Um die eingestellte Lage des Exzenterbolzens 11 auch während des Betriebs beizubehalten ist das Sicherungsblech 17 wieder auf den Sechskantkopf 16 aufzusetzen, so dass es diesen formschlüssig umgreift und somit eine unerwünschte Drehbewegung unterbindet, und mit der Schraube 18 zu befestigen. So ist gewährleistet, dass der Exzenterbolzen 11 nicht durch beispielsweise Vibrationen in seine untere Ruhelage, welche dem abgesenkten Zustand der Rolle 9 gemäß Fig.5 entspricht, zurück gerüttelt wird. Ist der innere Rohrabschnitt 5 also mit Hilfe des Exzenterbolzens 11 bzw. der Rolle 9 ordnungsgemäß verspannt, so kann er an ihm auftretende Kräfte über das Gegenlagerelement 8 in die Gleitelemente 7 einleiten. Vorteilhaft ist hierbei, dass das Gegenlagerelement 8 annährend direkt an den offenen Enden des äußeren Rohrabschnittes 4 angeordnet ist, so dass der Hebelarm zwischen an dem inneren Rohrabschnitt 5 angreifenden Kräften und dem Gegenlagerelement 8 möglichst kurz ist.

### Bezugszeichenliste

- 1: Teleskoprahmen
- 2: Einzelkornsämaschine
- F: Fahrtrichtung
- 3: Arbeitswerkzeug
- 4: äußerer Rohrabschnitt
- 4A: Seitenwand
- 5: innerer Rohrabschnitt
- 5A: Oberseite
- 6: Auskragung
- 7: Gleitelement
- 8: Gegenlagerelement
- 9: Rolle
- 10: Elastomer
- 11: Exzenterbolzen
- 12: Verbindungsabsatz
- 13: Auflagekörper
- 14: Drehachse
- 15: Längsachse
- D, D': Abstand
- 16: Sechskantkopf
- 17: Sicherungsblech
- 18: Schraube

## Patentansprüche

1. Landwirtschaftliche Maschine, die vorzugsweise als mehrreihige Einzelkornsämaschine (2) ausgeführt ist, mit einem Rahmen, der zumindest ein quer zur Fahrtrichtung angeordnetes, teleskopierbar in seiner Länge veränderbares Rahmenelement (1) aufweist, wobei das zumindest eine Rahmenelement (1) einen äußeren Rohrabschnitt (4) und mindestens einen inneren Rohrabschnitt (5) umfasst, wobei der mindestens eine innere Rohrabschnitt (5) mittels Gleitelementen (7) formschlüssig innerhalb des äußeren Rohrabschnitts (4) verschiebbar gelagert ist, **dadurch gekennzeichnet, dass** der äußere Rohrabschnitt (4) an zumindest einem offenen Ende ein Gegenlagerelement (8) umfasst, welches ein höhenverstellbares Lagerelement (9) umfasst, das sich länglich zwischen in Fahrtrichtung (F) gegenüberliegenden Seiten (4A) des äußeren Rohrabschnitts (4) erstreckt und unter dem mindestens einen inneren Rohrabschnitt (5) am äußeren Rohrabschnitt (4) angeordnet ist.

2. Landwirtschaftliche Maschine nach Anspruch 1, **dadurch gekennzeichnet, dass** das Gegenlagerelement (8) einen Exzenterbolzen (11) mit zwei gegenüberliegenden Verbindungsabsätzen (12) und einem sich zwischen den Verbindungsabsätzen (12) erstreckenden Auflagekörper (13) umfasst, dass die Verbindungsabsätze (12) exzentrisch an dem Auflagekörper (13) angeordnet sind, dass der Exzenterbolzen (11) über die zwei Verbindungsabsätze (12) drehbar an dem äußeren Rohrabschnitt (4) angeordnet ist.

3. Landwirtschaftliche Maschine nach Anspruch 2, **dadurch gekennzeichnet, dass** das Lagerelement (9) auf dem Auflagekörper (13) des Exzenterbolzens (11) angeordnet ist, dass das Lagerelement (9) mittels des Exzenterbolzens (11) höhenverstellbar zwischen den gegenüberliegenden Seiten (4A) des äußeren Rohrabschnitts (4) gelagert ist.

4. Landwirtschaftliche Maschine nach Anspruch 2 und/oder 3, **dadurch gekennzeichnet, dass** das Lagerelement (9) als drehbar auf dem Exzenterbolzen (11) gelagerte, vorzugsweise aus einem metallischem Werkstoff bestehende, Rolle (9) ausgeführt ist.

5. Landwirtschaftliche Maschine nach Anspruch 4, **dadurch gekennzeichnet, dass** die Rolle (9) eine zylindrische Laufbahn aufweist, dass die Laufbahn zumindest teilweise von einem elastischen Kunststoff (10) umfasst ist.

6. Landwirtschaftliche Maschine nach Anspruch 4 und/oder 5, **dadurch gekennzeichnet, dass** die Rolle (9) an beiden Enden sich von der Laufbahn radial nach außen erstreckende, tellerförmige Führungsabsätze (9F) aufweist.

7. Landwirtschaftliche Maschine nach zumindest einem der vorstehenden Ansprüche, **dadurch gekennzeichnet, dass** der mindestens eine innere Rohrabschnitt (5) anhand des höhenverstellbaren Lagerelementes (9) des Gegenlagerelementes (8) mit den Gleitelementen (7) verspannbar ist.

8. Landwirtschaftliche Maschine nach zumindest einem der Ansprüche 2 bis 4, **dadurch gekennzeichnet, dass** zumindest ein Verbindungsabsatz (12) des Exzenterbolzens (11) den äußeren Rohrabschnitt (4) durchdringt, dass auf der Außenseite des äußeren Rohrabschnitts (4) an dem Verbindungsabsatz (12) ein, vorzugsweise als Sechskantkopf (16) ausgebildetes, Einstellelement mittels dessen eine Drehung des Exzenterbolzens (11) einstellbar ist angeordnet ist.

9. Landwirtschaftliche Maschine nach zumindest einem der vorstehenden Ansprüche, **dadurch gekennzeichnet, dass** der äußere Rohrabschnitt (4) in seinem Inneren zumindest ein zweites Gegenlagerelement (8) umfasst.

10. Landwirtschaftliche Maschine nach Anspruch 9, **dadurch gekennzeichnet, dass** das zweite Gegenlagerelement (8) mit seinem Lagerelement (9) über dem inneren Rohrabschnitt (5) angeordnet ist.

11. Landwirtschaftliche Maschine nach zumindest einem der vorstehenden Ansprüche, **dadurch gekennzeichnet, dass** der mindestens eine innere Rohrabschnitt (5) dazu eingerichtet ist, vorzugsweise in vertikaler Richtung, auftretende Kräfte über das Gegenlagerelement (8) in die Gleitelemente (7) einzuleiten.

## Claims

1. Agricultural machine, which is preferably designed as a multi-row single-grain seed drill (2), comprising a frame which has at least one telescopically length-variable frame element (1) arranged transversely to the direction of travel, the at least one frame element (1) comprising an outer tube portion (4) and at least one inner tube portion (5), the at least one inner tube portion (5) being slidably mounted in a form-fitting manner within the outer tube portion (4) by means of sliding elements (7), **characterized in that** the outer tube portion (4) comprises a counter-bearing element (8) on at least one open end, which counter-bearing element comprises a height-adjustable bearing element (9) which extends in an elongate manner between sides (4A) of the outer tube portion (4) that are opposite in the direction of travel (F) and is arranged on the outer tube portion (4) below the at least one inner tube portion (5).

2. Agricultural machine according to claim 1, **characterized in that** the counter-bearing element (8) comprises an eccentric bolt (11) having two opposite connection shoulders (12) and a support body (13) extending between the connection shoulders (12), **in that** the connection shoulders (12) are arranged eccentrically on the support body (13), **and in that** the eccentric bolt (11) is arranged on the outer tube portion (4) so as to be rotatable via the two connection shoulders (12).

3. Agricultural machine according to claim 2, **characterized in that** the bearing element (9) is arranged on the bearing body (13) of the eccentric bolt (11), **and in that** the bearing element (9) is mounted in a height-adjustable manner between the opposite sides (4A) of the outer tube portion (4) by means of the eccentric bolt (11).

4. Agricultural machine according to claim 2 and/or 3, **characterized in that** the bearing element (9) is designed as a roller (9) which is mounted so as to be rotatable on the eccentric bolt (11) and preferably consists of a metal material.

5. Agricultural machine according to claim 4, **characterized in that** the roller (9) has a cylindrical raceway, **and in that** the raceway is at least partially surrounded by an elastic plastics material (10).

6. Agricultural machine according to claim 4 and/or 5, **characterized in that** the roller (9) has, at both ends, plate-shaped guide shoulders (9F) extending radially outward from the raceway.

7. Agricultural machine according to at least one of the preceding claims, **characterized in that** the at least one inner tube portion (5) can be clamped to the sliding elements (7) by means of the height-adjustable bearing element (9) of the counter-bearing element (8).

8. Agricultural machine according to at least one of claims 2 to 4, **characterized in that** at least one connection shoulder (12) of the eccentric bolt (11) penetrates the outer tube portion (4), **and in that** an adjusting element, preferably designed as a hexagonal head (16), by means of which rotation of the eccentric bolt (11) can be adjusted, is arranged on the outside of the outer tube portion (4) on the connection shoulder (12).

9. Agricultural machine according to at least one of the preceding claims, **characterized in that** the outer tube portion (4) comprises at least one second counter-bearing element (8) in its interior.

10. Agricultural machine according to claim 9, **characterized in that** the second counter-bearing element (8) is arranged with its bearing element (9) above the inner tube portion (5).

11. Agricultural machine according to at least one of the preceding claims, **characterized in that** the at least one inner tube portion (5) is designed to introduce forces occurring preferably in the vertical direction into the sliding elements (7) via the counter-bearing element (8).

## Revendications

1. Machine agricole, qui est de préférence exécutée sous forme d'une semeuse (2) de grains individuels à plusieurs rangées, comportant un cadre qui présente au moins un élément de cadre (1) disposé transversalement par rapport au sens de déplacement, pouvant être modifié de manière télescopique en longueur, l'au moins un élément de cadre (1) comprenant une section tubulaire externe (4) et au moins une section tubulaire interne (5), l'au moins une section tubulaire interne (5) étant logée de manière coulissante, par complémentarité de forme, à l'aide d'éléments coulissants (7) à l'intérieur de la section tubulaire externe (4), **caractérisée en ce que** la section tubulaire externe (4) comprend un élément de contre-palier (8) au niveau d'au moins une extrémité ouverte, lequel élément comprend un élément de palier (9) réglable en hauteur, qui s'étend longitudinalement entre des côtés (4A) opposés dans le sens de déplacement (F) de la section tubulaire externe (4) et qui est disposé sous l'au moins une section tubulaire interne (5) au niveau de la section tubulaire externe (4).

2. Machine agricole selon la revendication 1, **caractérisée en ce que** l'élément de contre-palier (8) comprend un boulon excentrique (11) comportant deux épaulements de liaison (12) opposés et un corps d'appui (13) s'étendant entre les épaulements de liaison (12), **en ce que** les épaulements de liaison (12) sont disposés excentriquement au niveau du corps d'appui (13), **en ce que** le boulon excentrique (11) est disposé rotatif au niveau de la section tubulaire externe (4) par l'intermédiaire des deux épaulements de liaison (12).

3. Machine agricole selon la revendication 2, **caractérisée en ce que** l'élément de palier (9) est disposé sur le corps d'appui (13) du boulon excentrique (11), **en ce que** l'élément de palier (9) est logé de manière réglable en hauteur, à l'aide du boulon excentrique (11), entre les côtés (4A) opposés de la section tubulaire externe (4).

4. Machine agricole selon la revendication 2 et/ou 3, **caractérisée en ce que** l'élément de palier (9) est exécuté sous forme d'un rouleau (9) logé rotatif sur le boulon excentrique (11), de préférence constitué d'un matériau métallique.

5. Machine agricole selon la revendication 4, **caractérisée en ce que** le rouleau (9) présente un chemin de roulement cylindrique, **en ce que** le chemin de roulement est encerclé au moins partiellement par un matériau synthétique élastique (10).

6. Machine agricole selon la revendication 4 et/ou 5,
**caractérisée en ce que** le rouleau (9) présente, au niveau des deux extrémités, des épaulements de guidage (9F), en forme d'assiette, s'étendant radialement vers l'extérieur à partir du chemin de roulement.

7. Machine agricole selon au moins l'une des revendications précédentes, **caractérisée en ce que** l'au moins une section tubulaire interne (5) peut être assemblée par serrage à l'aide de l'élément de palier (9) réglable en hauteur de l'élément de contre-palier (8) avec les éléments coulissants (7).

8. Machine agricole selon au moins l'une des revendications 2 à 4, **caractérisée en ce qu'**au moins un épaulement de liaison (12) du boulon excentrique (11) traverse la section tubulaire externe (4), **en ce qu'**un élément de réglage, de préférence conçu sous forme de tête hexagonale (16), à l'aide duquel une rotation du boulon excentrique (11) est réglable, est disposé sur le côté externe de la section tubulaire externe (4) au niveau de l'épaulement de liaison (12).

9. Machine agricole selon au moins l'une des revendications précédentes, **caractérisée en ce que** la section tubulaire externe (4) comprend, à l'intérieur, au moins un second élément de contre-palier (8).

10. Machine agricole selon la revendication 9, **caractérisée en ce que** le second élément de contre-palier (8) est disposé avec son élément de palier (9) sur la section tubulaire interne (5).

11. Machine agricole selon au moins l'une des revendications précédentes, **caractérisée en ce que** l'au moins une section tubulaire interne (5) est conçue pour introduire, de préférence dans la direction verticale, des forces qui surviennent par l'intermédiaire de l'élément de contre-palier (8) dans les éléments coulissants (7).
